# EUROPEAN PATENT SPECIFICATION

(11) **EP 0 930 713 B1**
(45) Date of publication and mention of the grant of the patent: **03.09.2003**
(21) Application number: 97830644.7
(22) Date of filing: 04.12.1997
(51) Int. Cl.: H03L 7/00, H04L 25/49, H04L 7/033

(54) **Decoding of a biphase modulated bitstream and relative selfsynchronizing frequency divider with noninteger ratio**
Dekodierung eines biphasen modulierten Bitstroms und selbstsynchronisierender Frequenzteiler mit nicht-ganzzahligen Verhältnis
Décodage d'un train binaire modulé en biphase et diviseur de fréquence non-entier synchronisant soit même

(43) Date of publication of application: 21.07.1999
(73) Proprietor: STMicroelectronics S.r.l., 20041 Agrate Brianza (Milano) (IT)
(72) Inventor: Bianchessi, Marco, 26010 Sergnano (IT); Dalle Feste, Sandro, 28100 Novara (IT); Serina, Nadia, 25030 Castelcovati (IT); Angelici, Marco, 21020 Galliate Lombardo (IT)
(74) Representative: Pellegri, Alberto

(56) References cited:
- EP-A- 0 425 302
- US-A- 4 185 273
- US-A- 4 992 790
- US-A- 5 459 765
- "DIFFERENTIAL MANCHESTER DECODER REQUIRING LOW SPEED SYSTEM CLOCK" IBM TECHNICAL DISCLOSURE BULLETIN, vol. 31, no. 10, 1 March 1989, pages 100-103, XP000118776

## Description

### FIELD OF APPLICATION

The present invention relates to the broadcasting of modulated digital signals, whose coding is based on a biphase modulation referred to as "Manchester", otherwise known as "Biphase Mark", and more in particular to a method and relative architecture to generate a phase synchronism signal of a stream of digital data to be demodulated.

### TECHNOLOGICAL BACKGROUND

In many applications wherein digitized signals or digital data are transmitted through a broadcasting medium, typically on carrier through frequencies or wavelengths digitally modulated, use is made of a digital coding based on a biphase modulation referred to as Manchester or also known as Biphase Mark. Such a modulation coding is characterized in that the occurrence of a transition within a given time slot corresponds to a logic "1" while the absence of any transition during to the time slot corresponds to a logic "0", while in each case there will be a transition at the beginning and another transition at the end of the reference time slot. Therefore, the informative content is tied to the presence or absence of transitions from a logic state to a different logic stage during the interval between the start transition and is totally independent from the logic value of the signal (that is, whether such signal is high or low during a certain phase).

The received digital stream to be demodulated then decoded using a synchronism signal (clock) that must be generated in such a way as to maintain a perfect phase synchronism with the stream of received digital data.

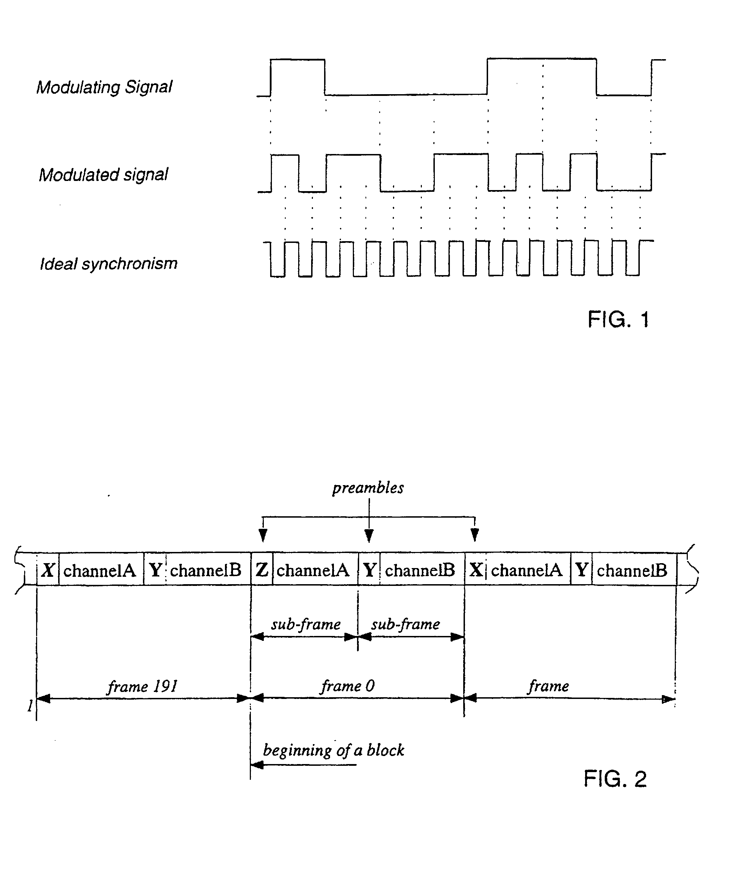

The coding based on a Manchester type biphase modulation and the relative signal of ideal decoding clock are illustrated in Fig. 1.

The type of coding based on a biphase Manchester modulation is exploited in many applications according to protocols that are established and standardized from time to time.

A typical example of application refers to the broadcast of audio signals coded according to the AES-EBU standard, later enhanced and redefined within different standardization bodies like for example the standards SP-DIF, IEC958, EIAJ, through maintaining unchanged the biphase type of coding.

In many systems the digital data are organized in a discontinuous manner that is in bursts. Typical applications include those in which the data is structured according to a TDMA (Time Division Multiple Access) protocol in which continuity of phase synchronism between successive bursts is not guaranteed.

Among these systems, wideband access systems of the passive optical network (PON) type are also included.

For example, when broadcasting digitized audio signals, two samples of the audio signal are transmitted at the prefixed sampling frequency, related to the right channel and to the left channel, respectively, and to each of these samples is associated a word called subframe. The subframes of channel A and of channel B are transmitted serially and alternately, each preceded by an acknowledgment preamble, as illustrated in the scheme of Fig. 2.

By way of illustration and without intending to limit the application of the system of the invention to the example taken into consideration, the ensuing description shall refer to an AES-EBU broadcasting protocol of digitized audio signals for pointing out the significant aspects of the invention.

With reference to the scheme of Fig. 2, the pair of subframes A and B corresponding to the same sampling instant constitutes a frame; a whole set of consecutive 192 frames forms a block.

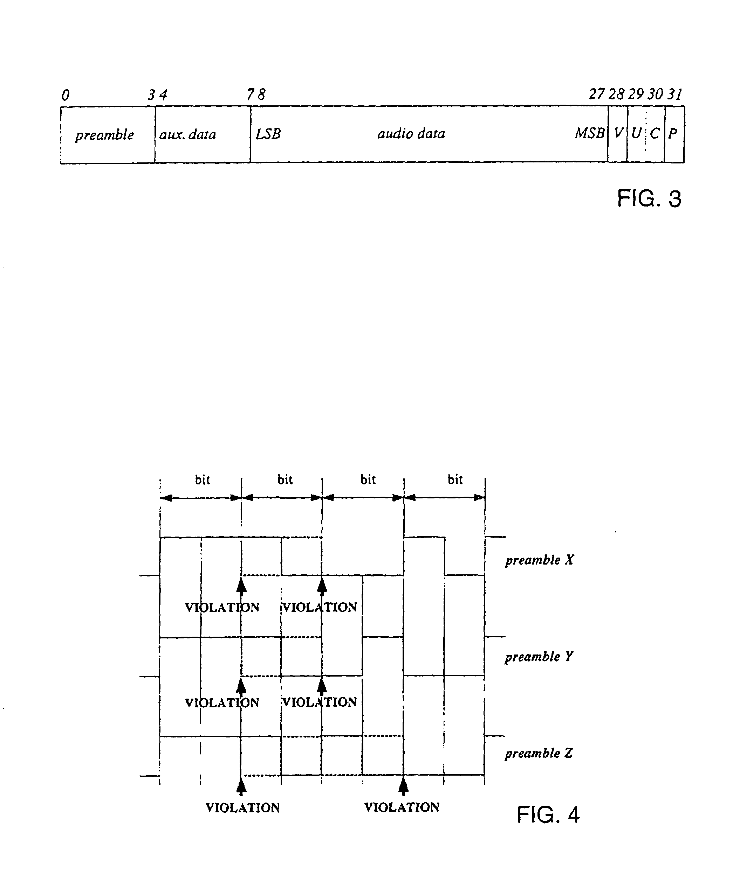

A subframe contains the data relative to the audio sample and a series of additional information: its structure is represented in Fig. 3.

Out of the 32 bits, the first four constitute the preamble; the following four bits transfer auxiliary data; the audio sample is represented by the following twenty bits; the last four bits contain control information, namely: the validity bit (V), the user bit (U), the state of the channel bit (C) and the parity bit (P), respectively.

There exist three different preambles that identify respectively the beginning of the subframe relative to channel A (X preamble), the beginning of the subframe relative to channel B (Y preamble) and the beginning of a new block (signaled by the substitution of the X preamble with the Z preamble).

Fig. 4 shows the relative waveforms of the three preambles.

Since the modulation code doesn't depend on the signal polarity, besides the three preamble sequences shown in the figure, the corresponding inverted versions are also valid.

For the correct reception and interpretation of the digital stream it is necessary to have a synchronism signal that permits the signal to be sampled correctly and to feed the samples to a decoding logic.

This phase synchronism signal must have an edge for each possible transition change of the broadcasted signal. Moreover, the edge of the synchronism signal should fall as close as possible to the middle of the interval between any two possible transitions variations in order to ensure the maximum immunity to noise and jitter.

Normally, this phase synchronism signal (clock) is generated by a PLL circuit, locked to the switching frequency of the broadcasted signal, with a carefully controlled phase. Once the signal is sampled, the decoding logic may be designed without any problems as a state machine employing as a clock the synchronism signal itself.

In this as well as in other similar applications, the synchronism signal is commonly produced by an analog PLL circuit that extracts from the received signal its clock content by means of a passband filter and uses a VCO, locked to the switching frequency of the received signal to generate a stable clock.

The clock signal so obtained is generally used, apart for decoding the date, to drive an eventual D/A converter downstream of the receiver, and therefore it must be very stable in terms of jitter in order to prevent degradation of the performances of the converter.

If this function is not required, for example when the user of data is a DSP, a completely digital solution, not requiring analog components like VCO, filters and frequency comparators is surely preferable, in view of a reduced complexity of integration.

Moreover, even in of a classical analog receiver, there exist operating conditions in which the signal is not perfectly locked (i.e., at start up or during the switching among different signal sources). In these cases the receiver would sample the signal at wrong instants, provoking decoding errors. Normally, the receivers signal these conditions through a validity bit, however it would be preferable to have an intrinsically more "robust" receiver, capable of correctly interpreting the signal even under a condition of an unlocked clock.

### SUMMARY OF THE INVENTION

This invention relates primarily to an improved decoding method of an input digital signal or stream, coded according to a biphase type of modulation, by sampling the input signal with a sampling signal in phase synchronism with the input digital signal. The method of the invention is based on the fact that said phase synchronism signal is derived from a clock signal (master clock) of a higher frequency of the maximum switching frequency of the digital input signal, by dividing its frequency with a fully digital divider circuit of irrational ratio, self-synchronizing with said input digital signal.

Preferably, the master clock signal should have a frequency in the vicinity of an integer multiple of the maximum frequency of the input signal, that is "nominally" multiple of the maximum frequency of the input signal.

According to a preferred embodiment of the method of the invention, a division by a certain integer number is effected by the use of a divider while enabling or disabling its switching through control signals that are generated by two circuits which sample the input signal with the master (high frequency) clock signal and analyze triplets of consecutive sampling values; the first circuit generating a first control signal upon detecting the triplet 001 or 110; and the second circuit generating a second control signal upon detecting the triplet 011 or 100.

Preferably, the enabling or disabling of the divider by the first circuit takes place on the rising edge of the master clock and by the second circuit on a falling edge of the master clock.

Another important aspect of the invention is the architecture of a fully digital frequency divider of an irrational ratio, self-synchronizing with an input digital signal coded according to a biphase modulation, capable of generating a sampling signal of the input stream with the characteristics illustrated above, starting from a master clock of a sufficiently high frequency, typically multiple (at least nominally) that is, having a value in the vicinity of a multiple integer of the switching frequency of the input stream, though not necessarily synchronized with it.

### BRIEF DESCRIPTION OF THE DRAWINGS

**Figure 1** illustrates a coding based on a biphase modulation;
**Figure 2** exemplifies the arrangement in frames and subframes of stereo audio information broadcasted serially;
**Figure 3** shows the structure of a subframe of Fig. 2;
**Figure 4** illustrates the function of the preamble portions of each subframe during the decoding phase;
**Figure 5** shows the decoding system by means of a sampling signal derived by digital division of a master clock, in case of perfect phase synchronism with the input digital stream to be decoded;
**Figures 6** and **7** show the cases in which the sampling signal is too "slow" and too "fast" in respect of the ideal situation of perfect phase synchronism;
**Figure 8** is a functional diagram of the self-synchronizing frequency divider with a noninteger ratio of the present invention;
**Figure 9** shows an embodiment of the controlled divider of Fig. 8;
**Figure 10** shows an embodiment of the block that detects the triplets. 001-110 of the divider of Fig. 8;
**Figure 11** shows an embodiment of the block that detects the triplets 001-100 of the divider of Fig. 8

### DESCRIPTION OF AN EMBODIMENT OF THE INVENTION

In order to describe the functioning of the architecture of the invention, it is useful to start from the ideal case of a perfectly synchronized clock signal, thereafter what may occur when the clock signal looses a perfect synchronism will be described.

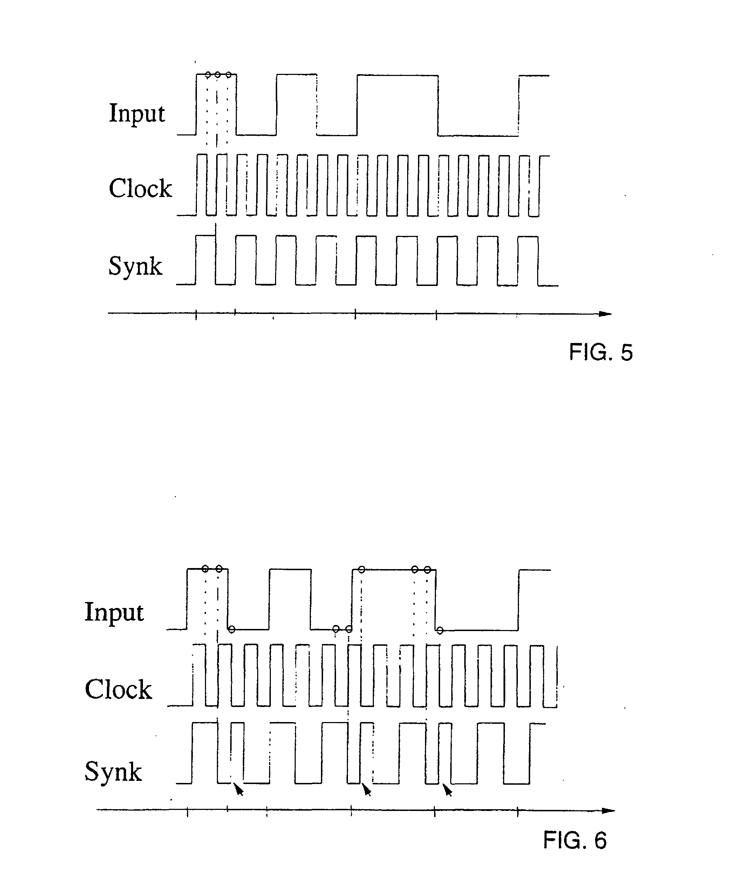

By observing Fig. 5, the master clock signal Ck has, in the considered example, a frequency equal to four times the maximum frequency of the Input signal The required phase synchronism signal, Synk, is in this case obtained through a simple division by two of the master signal Ck.

An interesting characteristic is observed for the case of a biphase modulated digital input stream: by sampling the input signal with subsequent falling and rising edges of the clock signal, Ck, triplets of samples that have always the same logic value are produced.

According to the present invention this fact is exploited to detect the condition of phase synchronism of the decoding and demodulating system.

In fact, when the sampling signal is not synchronized this rule is violated and triplets of samples of different value are produced.

The following figures show the two possible cases in which the sampling signal has a frequency higher and lower than its ideal "phase-lock" value.

From Fig. 6, it may be noticed that when the clock is "slow" (frequency too low), the triplets sometimes have their first two samples equal, the third sample is different.

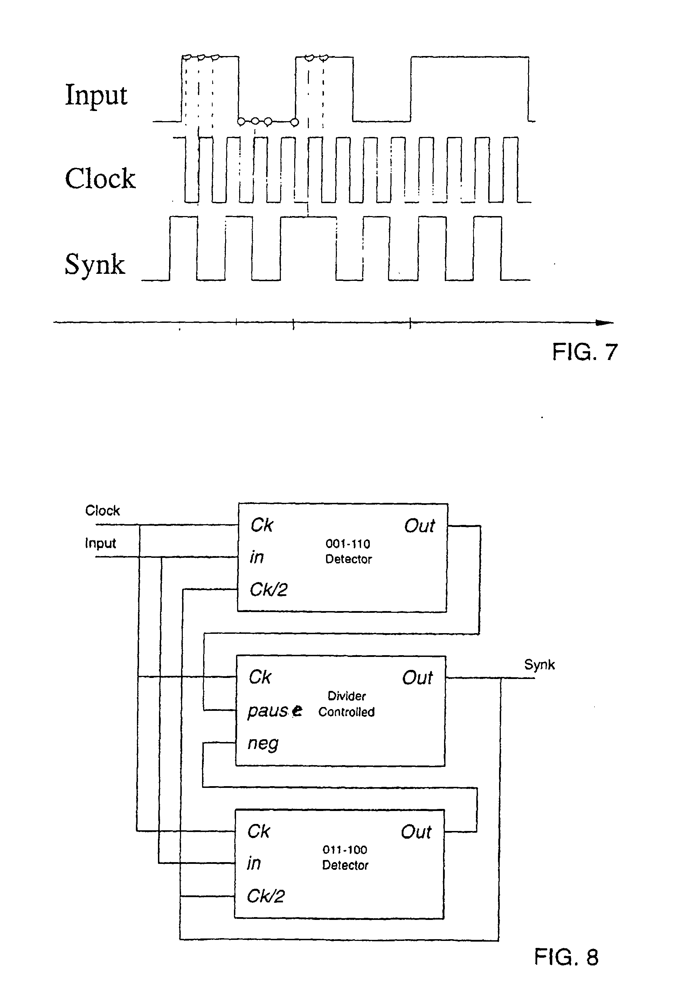

In the opposite case shown in Fig. 7, when the clock is "fast" (frequency too high), the first sample of the triplets is different while the following two samples are equal

This characteristic may be exploited to discriminate the two cases and to intervene consequently on the division of the master clock signal, Ck, to correct the generated synchronism signal, Synk, in such a way as to maintain it coherent with the phase of the input digital signal, Input.

The system of the invention carries out the correction in a substantially instantaneous manner preventing any wrong transition, which would generate decoding errors.

### DESCRIPTION OF THE ARCHITECTURE

Starting from the principle of operation described above, it is possible to realize different circuits that implement a frequency divider with the desired characteristics. Among the possible alternatives, there is one which, though not being the most efficient in terms of area of integration and speed, is particularly simple to illustrate.

The objective is to demonstrate the feasibility of a device that will function according to the above illustrated principles of the invention.

It should be pointed out that the invention is not limited to the particular embodiment described, being evident to a person skilled in the art that the same functions may be implemented even with different circuit architectures. For example, following the approach of the present invention, a circuit architecture perfectly appropriate may be defined by using a program of automatic circuital synthesis that usually offers advantages in terms of optimization of required area of integration and speed.

As illustrated in the diagram scheme of Fig. 8, the circuit may be composed of three fundamental blocks:
- a controlled divider;
- a detecting circuit of the sequences: 001 or 110 (clock too slow);
- a detecting circuit of the sequences: 011 or 100 (clock too fast).

The controlled divider may consists of a normal frequency divider circuit, dividing by two, realized for example with a JK flip-flop, where the J and K inputs are conditioned to a logic "high" state and introducing the possibility of disabling the switching by setting the J and K inputs to a low state when the control signal, Pause, is active and the possibility of switching instantaneously when the control signal Neg presents a rising edge.

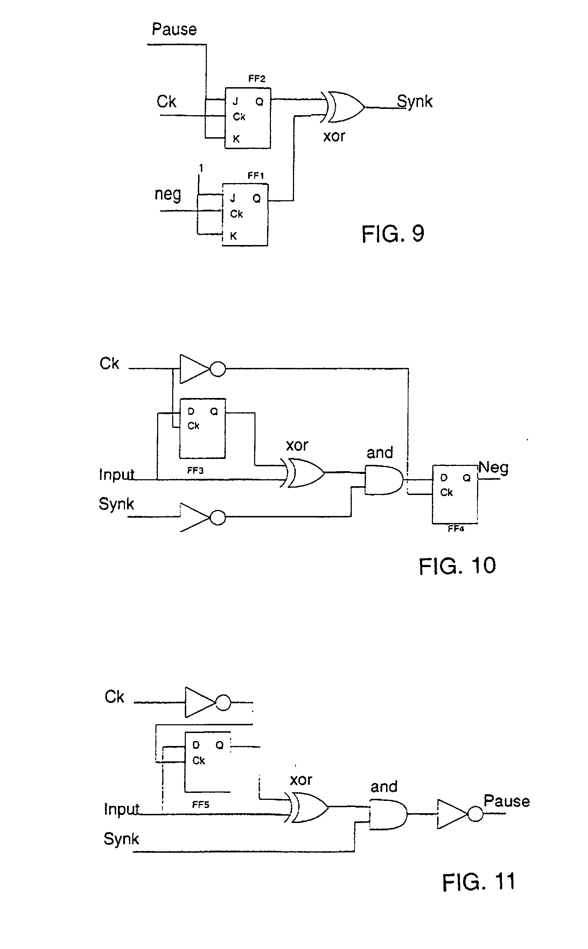

A possible embodiment is shown in Fig. 9.

As far as the two triplet detecting circuits are concerned, it is necessary that the detecting circuits not only detect the sequences, but also activate the two aforesaid control signals: Pause and Neg, at the correct instant, in order to effect a proper correction.

The detecting circuit of the sequences 001 or 110 may be realized, for example, according to the diagram of Fig. 10.

This detecting circuit verifies the identity of the second and third bit of a sequence of three bits by the use of an XOR gate. The circuit of Fig. 10, samples the Input signal on the rising edge of the master clock signal Ck and compares it through the XOR gate with the signal on the falling edge of the clock Ck.

When the result of the comparison is of inequality the output will be a "1", signaling a detection. The sequence is defined on the falling edge of the signal output by the divider (in the vicinity of Ck/2), herein defined as the phase synchronism signal, Synk.

Therefore, the detection is operative only when Synk is low, for this reason an AND gate is used to enable the signaling when Synk is at "0."

The detecting circuit of the sequences 011 and 100 may be realized, for example, according to the diagram of Fig. 11.

This circuit samples the Input signal on the falling edge of the master clock signal, Ck. If the sampled value has changed upon the arrival of a rising edge of the clock, the output, Pause, is a "0" and the controlled divider, that is, the flip-flop FF2 of the diagram of Fig. 8 does not switch.

Even in this case it is necessary to enable the detecting circuit on the falling edge of the signal output by the of the master clock signal (in the vicinity of Ck/2), that is of the phase synchronism signal, Synk. However, in this case the bits to detect are the two that precede the edge, then therefore this circuit is enabled when the Synk signal is high.

Of course, the divisor may be any integer number or a multiple of two, being sufficient the generation of appropriate control signals for enabling/disabling the switching of the divider to modify the ratio around the pre-established integer value, in line with the above exemplified principle of the invention.

## Claims

1. A wholly digital circuit for generating a signal (Synk) in phase synchronism with a digital input signal (Input) coded according to a biphase modulation, starting from a master clock signal (Ck) of a higher frequency than the maximum switching frequency of said input signal, **characterized by** comprising
a controlled frequency divider of said master clock signal (Ck) outputting said phase synchronized signal (Synk);
a first detecting circuit of a triplet sequence 001 or 110 of sampled values of said input signal (Input) with said master clock signal (Ck) generating a first control signal (Neg) of said frequency divider;
a second detecting circuit of a triplet sequence 011 or 100 of the sampled values of said input signal (Input) with said master clock signal (Ck) generating a second control signal (Pause) of said frequency divider;
said first (Neg) and second (Pause) control signals enabling or disabling the switching of the output of said frequency divider.

2. The circuit according to claim 1, **characterized in that** said controlled frequency divider comprises
a pair of JK flip-flops JK (FF1, FF2) and an output XOR gate having two inputs coupled respectively to the Q output of said two JK flip-flops (FF1, FF2);
the first flip-flop (FF1) of the pair has its inputs J and K biased so to enable switching and said first control signal (Neg) is fed to its clock input;
the second flip-flop (FF2) of the pair has its clock input driven by said master clock signal (Ck) and said second control signal (Pause) is fed to its J and K inputs

3. The circuit of claim 1, **characterized in that** said first detecting circuit comprises
a first and a second D flip-flop (FF3, FF4), the clock inputs of which are driven by said master clock signal (Ck) and by its inverted signal, respectively;
the first (FF3) of said two flip-flops having said input signal (Input) fed to its D input and its Q output being coupled to a first input of an XOR logic gate, to the second input of which is applied said input signal (Input);
the output of said XOR gate being coupled to a first input of an AND gate, to the second input of which is fed the inverted signal of said phase synchronism signal (Synk);
the output of said logic gate AND being coupled to the D input of said second D flip-flop (FF4), on the Q output of which being generated said first control signal (Neg);

4. The circuit of claim 1, **characterized in that** said second detecting circuit comprises
a D flip-flop (FF5), the clock input of which is driven by said master clock signal (Ck), to the D input of which is fed said input signal (Input) and the Q output of which is coupled to a first input of an XOR gate, to a second input of which is fed said input signal (input);
the output of said XOR gate being coupled to a first input of an AND gate, to a second input of which is fed said phase synchronism signal (Synk);
the inverted signal of the signal output by said AND gate constituting said second control signal (Pause).

5. A method of decoding a digital signal (Input) whose coding is based on a biphase modulation by sampling said digital signal (Input) with a sampling signal (Synk) in phase synchronism with said digital signal (Input), **characterized in that** said sampling signal (Synk), self-synchronized with said digital signal (Input), is derived from a master clock signal (Ck) of a frequency multiple of the maximum frequency of said input signal (Input), dividing the frequency of said master clock (Ck) according to an irrational ratio.

6. The method of claim 5, wherein said division is carried out by the use of a divider circuit by a certain integer number while enabling and disabling the switching of the divider circuit through control signals (Neg, Pause), generated by a first and a second circuits, each sampling said input signal (Input) with said master clock signal (Ck) and analyzing triplets of successive sampling values, the first circuit outputting a first control signal (Neg) upon detecting anyone of the triplets 001 or 100, the second circuit generating a second control signal (Pause) upon detecting anyone of the triplets 011 or 100.

7. The method of claim 6, wherein said enabling or disabling occurs on a rising edge of said master clock signal (Ck) for said first circuit and on a falling edge of said master clock signal (Ck) for said second circuit

8. The method according any of the claims 5 to 7, **characterized in that** said biphase modulated input signal (Input) is an AES-EBU signal.

## Patentansprüche

1. Volldigitaler Kreis zum Erzeugen eines Signals (Synk) in Phasensynchronizität mit einem digitalen Eingangssignal (Input), das entsprechend einer Biphasenmodulation moduliert ist, beginnend mit einem Haupttaktsignal (Ck) mit einer höheren Frequenz als die maximale Schaltfrequenz des Eingangssignals, **dadurch gekennzeichnet, dass** er umfasst:
einen kontrollierten Frequenzteiler des Haupttaktsignals (Ck), welcher das phasensynchronisierte Signal (Synk) ausgibt;
einen ersten Kreis zur Detektion einer Triplett-Sequenz 001 oder 110 von entnommenen Werten des Eingangssignals (Input) mit dem Haupttaktsignal (Ck), welcher ein erstes Kontrollsignal (Neg) des Frequenzteilers erzeugt;
einen zweiten Kreis zur Detektion einer Triplett-Sequenz 011 oder 100 von den entnommenen Werten des Eingangssignals (Input) mit dem Haupttaktsignal (Ck), welcher ein zweites Kontrollsignal (Pause) des Frequenzteilers erzeugt;
welche ersten (Neg) und zweiten (Pause) Kontrollsignale das Schalten des Ausgangs des Frequenzteilers ermöglichen oder verhindern.

2. Kreis nach Anspruch 1, **dadurch gekennzeichnet, dass** der kontrollierte Frequenzteiler umfasst
ein Paar von JK-Flip-Flops JK (FF1, FF2) und ein Ausgangs-XOR-Tor, welches zwei jeweils mit dem Q-Ausgang der beiden JK-Flip-Flops (FF1, FF2) gekoppelte Eingänge aufweist;.
die Eingänge J und K des ersten Flip-Flops (FF1) des Paars sind vorgespannt, um so ein Schalten zu ermöglichen, und das erste Kontrollsignal (Neg) wird seinem Takteingang zugeführt;
der Takteingang des zweiten Flip-Flops (FF2) des Paars ist von dem Haupttaktsignal (Ck) gesteuert, und das zweite Kontrollsignal (Pause) wird seinen Eingängen J und K zugeführt.

3. Kreis nach Anspruch 1, **dadurch gekennzeichnet, dass** der erste Detektionskreis umfasst
einen ersten und einen zweiten D-Flip-Flop (FF3, FF4), deren Takteingänge von dem Haupttaktsignal (Ck) bzw. seinem invertierten Signal gesteuert sind;
dem ersten (FF3) der beiden Flip-Flops wird das Eingangssignal (Input) seinem D-Eingang zugeführt und sein Q-Ausgang ist mit einem ersten Eingang eines XOR-Logik-Tors gekoppelt, dessen zweitem Eingang das Eingangssignal (Input) zugeführt wird;
der Ausgang des XOR-Tors ist mit einem ersten Eingang eines AND-Tors gekoppelt, dessen zweitem Eingang das invertierte Signal des Phasensynchronizitätssignals (Synk) zugeführt wird;
der Ausgang des logischen AND-Tors ist mit dem D-Eingang des zweiten D-Flip-Flops (FF4) gekoppelt, an dessen Q-Ausgang das erste Kontrollsignal (Neg) erzeugt wird;

4. Kreis nach Anspruch 1, **dadurch gekennzeichnet, dass** der zweite Detektionskreis umfasst
einen D-Flip-Flop (FF5), dessen Takteingang durch das Haupttaktsignal (Ck) gesteuert ist, dessen D-Eingang das Eingangssignal (Input) zugeführt wird und dessen Q-Ausgang mit einem ersten Eingang eines XOR-Tors gekoppelt ist, dessen zweitem Eingang das Eingangssignal (Input) zugeführt wird;
der Ausgang des XOR-Tors ist mit einem ersten Eingang eines AND-Tors gekoppelt, dessen zweitem Eingang das Phasensynchronizitätssignal (Synk) zugeführt wird;
das invertierte Signal des Signals, welches von dem AND-Tor ausgegeben wird, das zweite Kontrollsignal (Pause) bildet.

5. Verfahren zum Dekodieren eines digitalen Signals (Input), dessen Kodierung auf einer Biphasenmodulation basiert, durch Entnehmen des digitalen Signals (Input) mit einem Entnahmesignal (Synk) in Phasensynchronizität mit dem digitalen Signal (Input), **dadurch gekennzeichnet, dass** das Entnahmesignal (Synk), selbstsynchronisiert mit dem digitalen Signal (Input), aus einem Haupttaktsignal (Ck) eines Frequenzvielfachen der maximalen Frequenz des Eingangssignals (Input) durch Teilen der Frequenz des Haupttaktsignals (Ck) in einem irrationalen Verhältnis abgeleitet wird.

6. Verfahren nach Anspruch 5, bei welchem die Teilung durchgeführt wird durch den Einsatz eines Teilerkreises zur Teilung durch eine bestimmte ganze Zahl, während das Schalten des Teilerkreises durch Kontrollsignale (Neg, Pause) ermöglicht oder verhindert wird, die durch einen ersten und einen zweiten Kreis erzeugt werden, von denen jeder das Eingangssignal (Input) mit dem Haupttaktsignal (Ck) entnimmt und Tripletts von aufeinanderfolgenden Entnahmewerten analysiert, wobei der erste Kreis ein erstes Kontrollsignal (Neg) nach Detektieren eines der Tripletts 001 oder 100 ausgibt, der zweite Kreis ein zweites Kontrollsignal (Pause) nach Detektieren eines der Tripletts 011 oder 100 erzeugt.

7. Verfahren nach Anspruch 6, bei welchem das Ermöglichen oder Verhindern auf einem ansteigenden Rand des Haupttaktsignals (Ck) für den ersten Kreis und auf einem fallenden Rand des Haupttaktsignals (Ck) für den zweiten Kreis erfolgt.

8. Verfahren nach einem der Ansprüche 5 bis 7, **dadurch gekennzeichnet, dass** das biphasenmodulierte Eingangssignal (Input) ein AES-EBU-Signal ist.

## Revendications

1. Circuit totalement numérique pour produire un signal (Synk) synchronisé en phase avec un signal d'entrée numérique (Input) codé selon une modulation biphasée, en partant d'un signal d'horloge maître (Ck) de fréquence plus élevée que la fréquence de commutation maximum du signal d'entrée, **caractérisé en ce qu'**il comprend :
un diviseur de fréquence commandé du signal d'horloge maître (Ck) fournissant le signal synchronisé en phase (Synk) ;
un premier circuit de détection d'une séquence de triplets 001 ou 110 de valeurs échantillonnées du signal d'entrée (Input) par le signal d'horloge maître (Ck), produisant un premier signal de commande (Neg) du diviseur de fréquence ;
un second circuit de détection d'une séquence de triplets 011 ou 100 des valeurs échantillonnées du signal d'entrée (Input) par le signal d'horloge maître (Ck), produisant un second signal de commande (Pause) du diviseur de fréquence ;
les premier (Neg) et second (Pause) signaux de commande validant ou invalidant la commutation de la sortie du diviseur de fréquence.

2. Circuit selon la revendication 1, **caractérisé en ce que** le diviseur de fréquence commandé comprend :
deux bascules JK (FF1, FF2) et une porte OU Exclusif de sortie ayant deux entrées couplées à la sortie Q des deux bascules JK (FF1, FF2) ;
la première (FF1) des deux bascules ayant ses entrées J et K polarisées pour permettre la commutation et le premier signal de commande (Neg) étant fourni à son entrée d'horloge ;
la seconde (FF2) des deux bascules ayant son entrée d'horloge pilotée par le signal d'horloge maître (Ck) et le second signal de commande (Pause) étant fourni à ses entrées J et K.

3. Circuit selon la revendication 1, **caractérisé en ce que** le premier circuit de détection comprend :
une première et une seconde bascule D (FF3, FF4) dont les entrées d'horloge sont pilotées par le signal d'horloge maître (Ck) et par son inverse, respectivement ;
la première (FF3) des deux bascules ayant son signal d'entrée (Input) fourni à son entrée D et sa sortie Q étant couplée à la première entrée d'une porte logique OU Exclusif, à la seconde entrée de laquelle est appliqué le signal d'entrée Input ;
la sortie de la porte OU Exclusif étant couplée à une première entrée d'une porte ET dont la seconde entrée reçoit le signal inversé du signal synchronisé en phase (Synk) ;
la sortie de la porte logique ET étant couplée à l'entrée D de la seconde bascule D (FF4) sur la sortie Q de laquelle est produit le premier signal de commande (Neg) ;

4. Circuit selon la revendication 1, **caractérisé en ce que** le second circuit de détection comprend :
une bascule D (FF5) dont l'entrée d'horloge est pilotée par le signal d'horloge maître (Ck), à l'entrée D de laquelle est fourni le signal d'entrée (Input), et la sortie Q de laquelle est couplée à une première entrée d'une porte OU Exclusif, à une seconde entrée de laquelle est fourni le signal d'ventrée (Input) ;
la sortie de la porte OU Exclusif étant couplée à une première entrée d'une porte ET dont la seconde entrée est alimentée par le signal synchronisé en phase (Synk) ;
le signal inversé de la sortie de la porte ET constituant le second signal de commande (Pause).

5. Procédé de décodage d'un signal numérique (Input) dont le codage est basé sur une modulation biphasée par échantillonnage du signal numérique (Input) par un signal d'échantillonnage (Sync) synchronisé en phase avec le signal numérique (Input), **caractérisé en ce que** le signal d'échantillonnage (Sync), autosynchronisé sur le signal numérique (Input), est obtenu à partir d'un signal d'horloge maître (Ck) de fréquence multiple de la fréquence maximum du signal d'entrée (Input), en divisant la fréquence de l'horloge maître (Ck) selon un rapport irrationnel.

6. Procédé selon la revendication 5, dans lequel la division est effectuée par utilisation d'un circuit diviseur par un certain nombre entier tout en invalidant et invalidant la commutation du circuit diviseur par des signaux de commande (Neg, Pause) produits par des premier et second circuits, échantillonnant chacun le signal d'entrée (Input) par le signal d'horloge maître (Ck) et analysant des triplets de valeurs d'échantillonnage successives, le premier circuit fournissant un premier signal de commande (Neg) à la suite de la détection de l'un quelconque des triplets 001 ou 100, le second circuit fournissant un second signal de commande (Pause) à la suite de la détection de l'un quelconque des triplets 011 ou 100.

7. Procédé selon la revendication 6, dans lequel la validation ou l'invalidation survient sur un front montant du signal d'horloge maître (Ck) pour le premier circuit et d'un front descendant du signal d'horloge maître (Ck) pour le second circuit.

8. Procédé selon l'une quelconque des revendications 5 à 7, **caractérisé en ce que** le signal d'entrée modulé biphasé (Input) est un signal AES-EBU.
